# EUROPEAN PATENT APPLICATION

(11) **EP 1 266 726 A2**
(43) Date of publication of application: **18.12.2002**
(21) Application number: 02012930.0
(22) Date of filing: 11.06.2002
(51) Int. Cl.: B25J 5/00, B25J 19/00

(54) **Pneumatic manipulator mounted on wheels**

(30) Priority: 12.06.2001 IT TO20010564
(71) Applicant: Famatec S.r.l., 38010 Taio (IT)
(72) Inventor: Pancheri, Italo, 38020 Livo (IT)
(74) Representative: Cerbaro, Elena

(57) **Abstract**

A pneumatic manipulator (1) having a base (2), an upright (4) projecting from the base (2), and a part gripping device (7) fitted movably to the upright (4); the base (2) being mounted movably on a number of highly smooth-running castors (3) capable of continuously supporting the total weight of the manipulator (1) and of any part carried by the manipulator (1).

## Description

The present invention relates to a pneumatic manipulator.

As is known, in many production plants, particularly heavy, bulky parts must be handled manually with the aid of pneumatic manipulators designed to sequentially engage the part, lift it to a predetermined height, and then compensate the weight of the part so that it can then be moved manually by the operator with a minimum of effort.

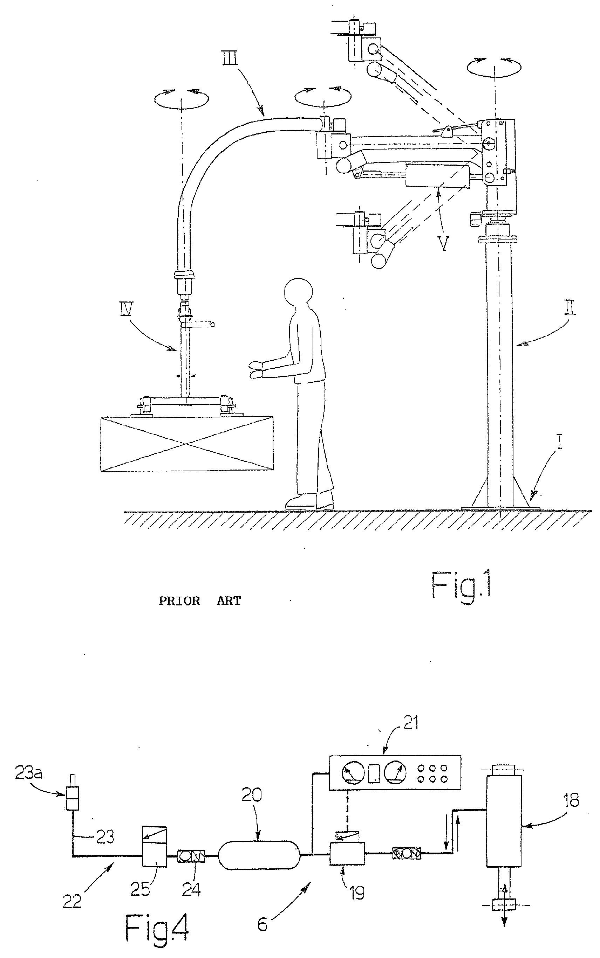

With reference to Figure 1, known pneumatic manipulators comprise: a base I anchored to the floor; an upright II fixed directly to base I; an articulated arm III fitted in rotary manner to the top of upright II; and a gripping device IV fixed to the free end of articulated arm III to grip and retain the part for handling.

Known pneumatic manipulators also comprise a linear pneumatic actuator V for adjusting the tilt of articulated arm III with respect to the vertical, so as to lift or lower the arm; and a control unit for regulating pressurized-air supply to linear pneumatic actuator V, so as to sequentially grip the part, lift to a predetermined height, and then compensate the weight of the part so that it can then be moved manually in three directions by the operator acting directly on the part itself with a minimum amount of effort.

The main drawback of pneumatic manipulators of the above type is the relatively small work area available in relation to the size of the machine : very often, in fact, the pneumatic manipulator required to move a part within a given area cannot be installed, on account of nearby machinery not allowing enough space in which to maneuver.

By way of at least a partial solution to the above drawbacks, pneumatic manipulators have been designed and marketed, in which the base is fixed to a supporting platform on the floor, which can be lifted and moved to move the manipulator from one workplace to another using an ordinary lift truck.

Though the above solution allows the pneumatic manipulator to be positioned freely within the plant, without actually increasing the work area of the manipulator, the pneumatic manipulator must be deactivated and unloaded completely when moved from one workplace to another.

By way of at least a partial solution to the above drawback, pneumatic manipulators have also been designed and marketed, in which the base is fixed to a slide running along a rail fixed to the ceiling. In which case, the structure of the pneumatic manipulator is obviously inverted, with the upright extending downwards from the ceiling.

While allowing the part to be transported from one workplace to another, the above solution has the drawback of being particularly expensive as compared with conventional solutions, and of restricting movement of the manipulator to the path defined by the rail along the ceiling.

It is an object of the present invention to provide a pneumatic manipulator designed to eliminate the aforementioned drawbacks.

According to the present invention, there is provided a pneumatic manipulator comprising a base, an upright projecting from said base, and a part gripping device fitted movably to said upright; said pneumatic manipulator being characterized by the base being mounted movably on a number of highly smooth-running wheels capable of continuously supporting the total weight of the manipulator and of any part carried by the manipulator.

A non-limiting embodiment of the present invention will be described by way of example with reference to the accompanying drawings, in which:
Figure 2 shows a view in perspective of a pneumatic manipulator in accordance with the teachings of the present invention;
Figure 3 shows a plan view of the pneumatic manipulator in Figure 2;
Figure 4 shows a diagram, with parts removed for clarity, of the pneumatic circuit of the pneumatic manipulator in Figures 2 and 3;
Figures 5 and 6 show two different views, with parts in section and parts removed for clarity, of a detail of the pneumatic manipulator in Figures 2 and 3;
Figure 7 shows a view in perspective of a further embodiment of the pneumatic manipulator in Figures 2 to 6.

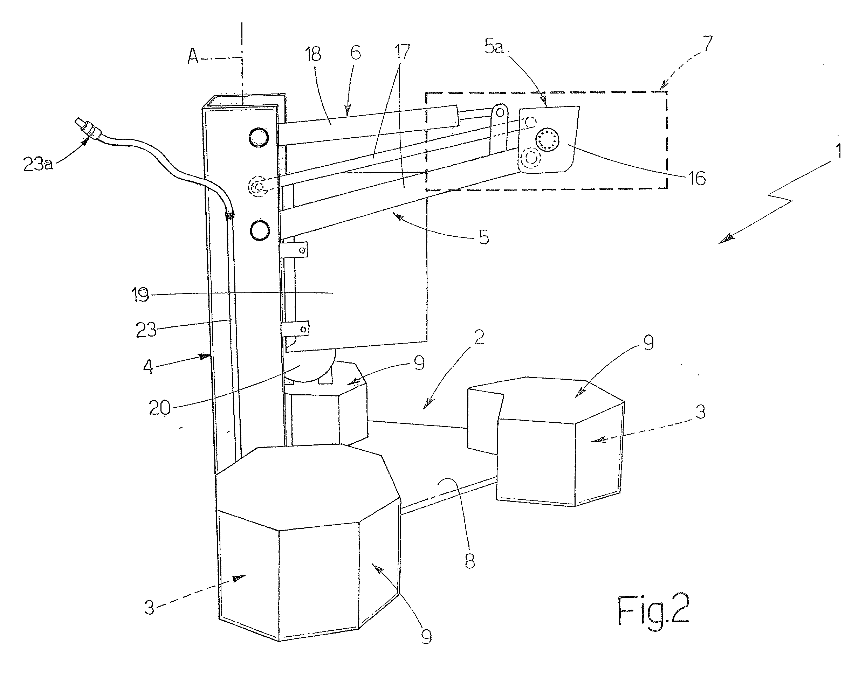

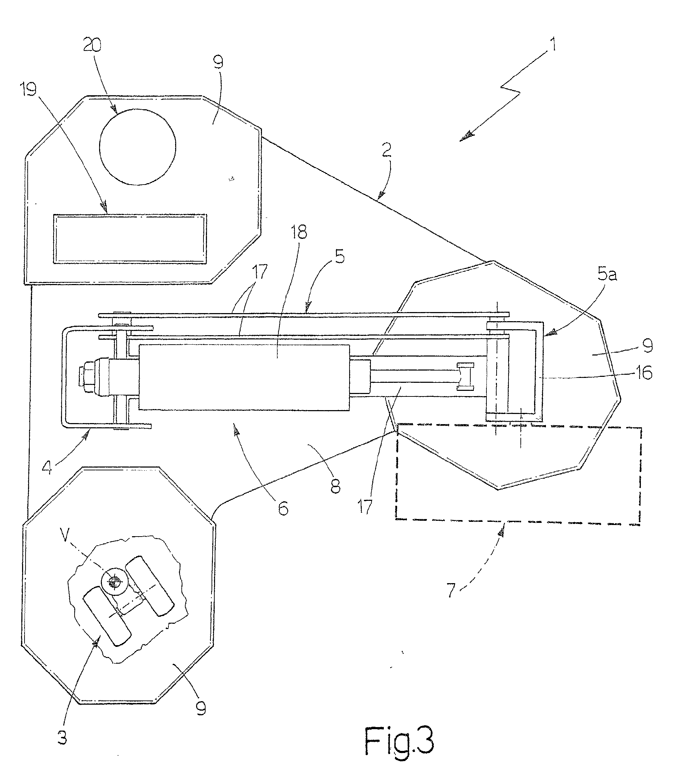

Number 1 in Figures 2 and 3 indicates as a whole a pneumatic manipulator particularly suitable for lifting and moving parts along paths varying in any manner and winding in confined spaces between obstacles of various types, after first compensating the weight of the part so that it can then be moved manually in three directions by the operator acting directly on the part with a minimum of effort.

Manipulator 1 comprises: a horizontal base 2 mounted movably on a number of highly smooth-running castors 3 capable of continuously supporting the total weight of manipulator 1 and of any part carried by manipulator 1; an upright 4 projecting from base 2 in a preferably, though not necessarily, vertical direction; and an articulated arm 5 hinged to upright 4 so as to swing, with respect to upright 4, about a substantially horizontal axis of rotation.

Manipulator 1 also comprises an articulated arm actuating device 6 for adjusting, on command, the tilt of articulated arm 5 with respect to the floor, as described in detail later on; and a part gripping device 7 fixed to the free end 5a of articulated arm 5, and the off-floor height h of which can be adjusted alongside variations in the tilt of articulated arm 5.

In the example shown, horizontal base 2 is defined by a substantially triangular supporting plate 8, the vertices of which are fitted in rotary manner with three castors 3; and by three guard bells 9 fixed to the three vertices of supporting plate 8, with their concavities facing downwards, and each housing a respective castor 3.

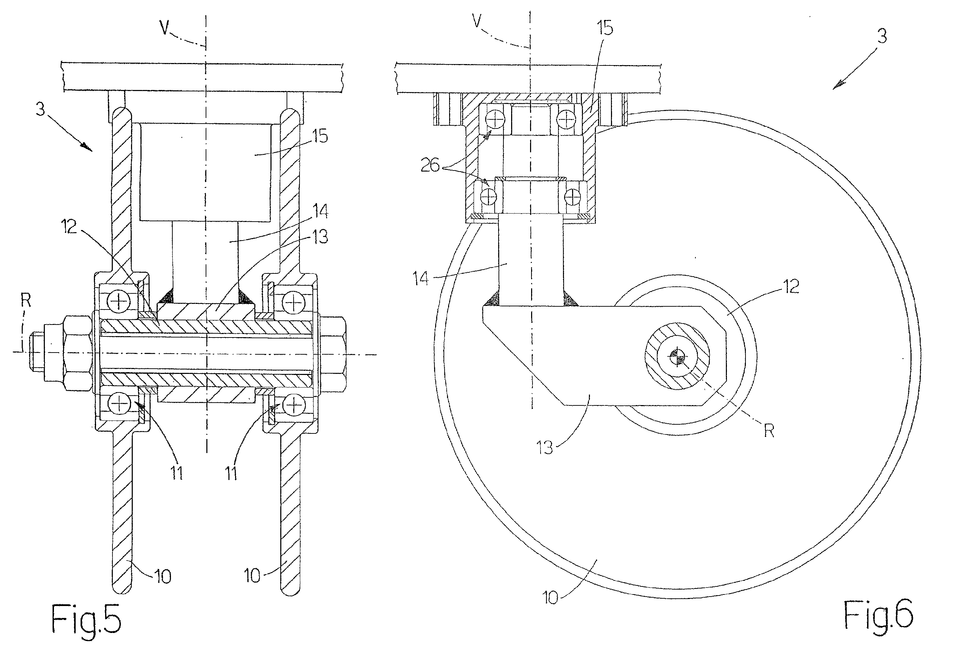

With particular reference to Figures 5 and 6, in the example shown, each castor 3 is defined by a pair of disk-shaped wheels 10 fitted in rotary manner, with the interposition of appropriate rolling bearings 11, to the two opposite axial ends of a horizontal cylindrical hub 12.

Hub 12 is in turn fitted to the free end of a supporting arm 13, which projects from the bottom end of a cylindrical pin 14 fitted in rotary manner inside a supporting bush 15 with the interposition of appropriate rolling bearings 26. Pin 14 rotates freely about a vertical axis V; and supporting arm 13 is so shaped that hub 12 can move in cantilever manner with respect to axis V, while maintaining the axis R of rotation of the two disk-shaped wheels 10 at all times in a plane perpendicular to axis V.

Supporting bush 15 is fitted to the bottom of guard bell 9 or to an appendix of supporting plate 8 projecting inside guard bell 9, so that the two disk-shaped wheels 10 can rotate freely inside guard bell 9 about both axis R and axis V.

With reference to Figures 2 and 3, in the example shown, upright 4 is defined by a U-section box beam projecting from supporting plate 8 coaxially with an axis A perpendicular to supporting plate 8, and therefore vertically; while articulated arm 5 is defined by an end attachment head or plate 16, to which gripping device 7 is fitted in projecting manner, and by two connecting arms 17, each hinged at one end to upright 4, and at the other end to end attachment head or plate 16.

The two arms 17 are arranged in the form an articulated parallelogram, so that end attachment head or plate 16 can be adjusted in height h off the floor alongside variations in the tilt of articulated arm 5, while maintaining the same orientation in space at all times.

In the example shown, end attachment head or plate 16 can move in space along an arc-shaped trajectory lying in a vertical plane.

Articulated arm 5 may obviously be designed differently to add further degrees of freedom to the above configuration.

With reference to Figures 2, 3 and 4, articulated arm actuating device 6 comprises a linear pneumatic actuator 18 hinged at one end to upright 4 and at the other end to one of the two connecting arms 17 of articulated arm 5; and a pneumatic distributor 19 for regulating, on command and as described in detail later on, pressurized-air supply to and from linear pneumatic actuator 18, so as to control the total axial length of actuator 18 and so adjust the tilt of articulated arm 5 with respect to the vertical.

Articulated arm actuating device 6 also comprises a pressurized-air storage tank 20 for storing the pressurized air required to operate actuating device 6; and an operator control panel 21 by which to drive pneumatic distributor 19 to lift or lower in controlled manner articulated arm 5 and, therefore, gripping device 7 fixed to end attachment head or plate 16 of articulated arm 5.

Storage tank 20 is fixed directly to base 2 to travel together with pneumatic manipulator 1, and is defined by an airtight vessel of such a capacity as to permit operation of pneumatic manipulator 1 for a given period of time. In the example shown, airtight vessel 20 is located alongside upright 4 to avoid interfering with the movement of articulated arm 5.

Pneumatic distributor 19 is a commonly used type and therefore not described in detail. Suffice it to say it is capable, on command, of maintaining a constant air pressure of linear pneumatic actuator 18 to automatically compensate the weight of articulated arm 5, of gripping device 7, and of any part attached to gripping device 7. In addition, pneumatic distributor 19 also provides, on command, for feeding or expelling pressurized air to or from linear pneumatic actuator 18, so as to lift or lower articulated arm 5 in controlled manner, regardless of the weight of any part attached to gripping device 7.

Working directly on control panel 21, the operator can therefore, in sequence, engage the part, lift it to any predetermined height, and compensate the weight of the part so it can then be moved manually by the operator with a minimum of effort. In the example shown, once the weight of the part is compensated, the operator, to lower the part, need simply push down articulated arm 5, gripping device 7, or the part itself attached to gripping device 7, so as to increase the air pressure in linear pneumatic actuator 18. The increase in pressure is immediately compensated by pneumatic distributor 19, which, to lower the pressure, expels air from linear pneumatic actuator 18, so that articulated arm 5 is lowered slowly and gradually.

Similarly, to lift the part higher, the operator simply pushes up articulated arm 5, gripping device 7, or the part itself attached to gripping device 7, so as to reduce the air pressure in linear pneumatic actuator 18. The fall in pressure is immediately compensated by pneumatic distributor 19, which, to increase the pressure, feeds pressurized air to linear pneumatic actuator 18, so that articulated arm 5 is raised slowly and gradually.

It should be pointed out that, in the example shown, pneumatic distributor 19 is a "pneumatically controlled" type, so that control panel 21 is defined by a number of known air valves and/or relays for appropriately driving pneumatic distributor 19 via one or more pressurized-air conduits.

The above solution has the big advantage of using the pressurized air in storage tank 20 for supplying not only linear pneumatic actuator 18 but also control panel 21 and pneumatic distributor 19, which would otherwise require an electric power source. Pneumatic distributor 19 may of course also be "electrically controlled", in which case, control panel 21 is defined by a number of conventional switches and relays.

With reference to Figure 4, articulated arm actuating device 6 also comprises a connecting terminal 22 for connection to an external pneumatic circuit, and which provides for selectively and rapidly connecting and easily disconnecting storage tank 20 directly to and from a generic pressurized-air source for filling tank 20.

In the example shown, connecting terminal 22 is defined by a hose 23 fixed at one end with a fast-fit sleeve 23a, and by a one-way valve 24 interposed between the other end of hose 23 and storage tank 20, and oriented so as to only permit pressurized-air flow towards storage tank 20.

Preferably, though not necessarily, connecting terminal 22 may also be provided with a pressure reducer 25 for reducing to a given value the pressure of the air supplied to storage tank 20 along hole 23.

Operation of pneumatic manipulator 1 as described and illustrated herein is easily deducible from the foregoing description with no further explanation required.

Pneumatic manipulator 1 obviously has numerous advantages as compared with conventional types: castors 3 and storage tank 20 enable the part to be transported along even long, winding paths, with no limitation as to routing.

By not having a fixed workplace, pneumatic manipulator 1 described above eliminates the need for particularly long articulated arms to extend the work area as far as possible, so that it is slimmer and lighter in design, thus reducing inertia and the power required to move the part.

Pneumatic manipulator 1 also has the advantage of not necessarily requiring articulated joints for rotating articulated arm 5 about a vertical axis : both rough and precision positioning, in fact, can be achieved using highly smooth-running castors 3.

Finally, pneumatic manipulator 1 as described above also provides for fitting base 2 with containers, auxiliary devices or other equipment for speeding up further processing or assembly of the part.

Clearly, changes may be made to pneumatic manipulator 1 as described and illustrated herein without, however, departing from the scope of the present invention.

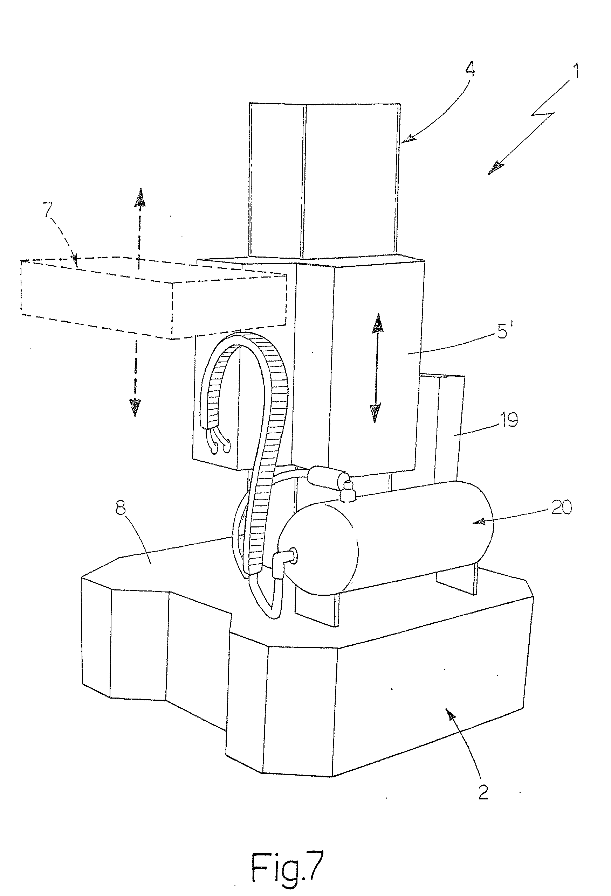

In particular, with reference to Figure 7, articulated arm 5 may be replaced with a slide 5' running vertically along upright 4.

In which case, gripping device 7 is fitted directly to and projects from slide 5'; and articulated arm actuating device 6 is replaced with an appropriate slide actuating device, which differs from the articulated arm actuating device as regards the location of linear pneumatic actuator 18.

Also, in this case, horizontal base 2 has a substantially rectangular supporting plate 8 fitted in rotary manner at the corners with four castors 3.

## Claims

1. A pneumatic manipulator (1) comprising a base (2), an upright (4) projecting from said base (2), and a part gripping device (7) fitted movably to said upright (4); said pneumatic manipulator (1) being **characterized by** the base (2) being mounted movably on a number of highly smooth-running wheels (3) capable of continuously supporting the total weight of the manipulator (1) and of any part carried by the manipulator (1).

2. A pneumatic manipulator as claimed in Claim 1, **characterized by** comprising a connecting member (5, 5') fitted movably to the upright (4); said gripping device (7) being carried by said connecting member (5, 5').

3. A pneumatic manipulator as claimed in Claim 2, **characterized by** comprising pneumatic actuating means (6) for controlling the position of said connecting member (5, 5') with respect to said upright (4), so as to compensate the weight of the connecting member (5, 5'), of the gripping device (7), and of any part attached to said gripping device (7).

4. A pneumatic manipulator as claimed in Claim 3, **characterized in that** said pneumatic actuating means (6) comprise a linear pneumatic actuator (18) for controlling the position of said connecting member (5, 5'); and a pneumatic distributor (19) for regulating, on command, pressurized-air supply to and from said linear pneumatic actuator (18), so as to selectively feed or expel pressurized air to or from the linear pneumatic actuator (18) to maintain a constant air pressure in the linear pneumatic actuator (18).

5. A pneumatic manipulator as claimed in Claim 4, **characterized in that** said pneumatic actuating means (6) also comprise a pressurized-air storage tank (20) for storing the pressurized air required to operate said linear pneumatic actuator (18); said storage tank (20) being fixed to said base (2).

6. A pneumatic manipulator as claimed in Claim 4 or 5, **characterized in that** said pneumatic actuating means (6) also comprise a control panel (21) from which said pneumatic distributor (19) can be controlled by an operator.

7. A pneumatic manipulator as claimed in any one of the foregoing Claims, **characterized in that** said connecting member (5, 5') comprises an articulated arm (5) hinged to said upright (4) so as to swing with respect to the upright (4) about a substantially horizontal axis of rotation; the gripping device (7) being fixed to the free end (16) of said articulated arm (5).

8. A pneumatic manipulator as claimed in any one of Claims 2 to 6, **characterized in that** said connecting member (5, 5') comprises a slide (5') mounted to run along said upright (4); the gripping device (7) being fixed to and projecting from said slide (5').

9. A pneumatic manipulator as claimed in any one of the foregoing Claims, **characterized in that** said wheels (3) are castors (3).
